# EUROPEAN PATENT SPECIFICATION

(11) **EP 3 031 776 B1**
(45) Date of publication and mention of the grant of the patent: **09.01.2019**
(21) Application number: 14771940.5
(22) Date of filing: 04.08.2014
(51) Int. Cl.: C01B 3/58, B01J 8/04

(54) **CARBON DIOXIDE PREFERENTIAL OXIDATION REACTOR**
REAKTOR ZUR PRÄFERENTIELLEN OXIDATION VON KOHLENMONOXID.
RÉACTEUR D'OXYDATION PRÉFÉRENTIELLE DE MONOXYDE DE CARBONE

(30) Priority: 07.08.2013 ES 201331241
(43) Date of publication of application: 15.06.2016
(73) Proprietor: Abengoa Hidrógeno, S.A., 41014 Sevilla (ES)
(72) Inventor: SCHOLTEN, Anton, E-41014 Sevilla (ES); WESTERNDORP, Gerard, E-41014 Sevilla (ES); BREY SÁNCHEZ, Jose Javier, E-41014 Sevilla (ES); SARMIENTO MARRÓN, Belén, E-41014 Sevilla (ES); GALLARDO GARCÍA-ORTA, Victoria, E-41014 Sevilla (ES); MARTÍN BETANCOURT, Mariana, E-41014 Sevilla (ES)
(74) Representative: Pons
(86) International application number: PCT/ES2014/070637
(87) International publication number: WO 2015/018961

(56) References cited:
- EP-A1- 1 184 336
- EP-A1- 2 455 334
- WO-A1-00/32513
- US-B1- 6 284 206

## Description

### OBJECT OF THE INVENTION

The present invention may be included in the technical field of carbon monoxide preferential oxidation reactors and, more specifically, in preferential oxidation reactors that form part of a system for reforming of hydrocarbons and alcohols, preferably ethanol (bioethanol), for subsequently feeding a fuel cell for use in naval or marine applications.

The object of the invention is a CO preferential oxidation reactor that carries out the purification of H₂-rich streams derived from organic fuel reforming processes, as a stage prior to feeding a fuel cell.

Additionally, the CO preferential oxidation reactor of the present invention allows the evaporation of water.

### BACKGROUND OF THE INVENTION

Preferential oxidation reactors used to purify H₂-rich streams derived from organic fuel reforming processes, where the preferential oxidation reactors include a catalyst for CO preferential oxidation to reduce the concentration of said CO in the stream with high H₂ concentration, are known in the state of the art.

In particular, CO preferential oxidation reactors used to purify a stream with a high H₂ concentration prior to being fed to a fuel cell are known in the state of the art. These include patent application CN101462694 (A), which relates to a PrOX or CO preferential oxidation reactor fed by a stream with a high H₂ concentration derived from a methanol reforming process comprising two PrOX reactors having catalyst beds alternated with three heat exchangers, where the oxidising agent is air and the heat exchangers are disposed after the PrOX reactors in a longitudinal direction. The stream obtained at the outlet of this PrOX reactor achieves a reduction in CO concentration to levels of up to 30 ppm and allows feeding of a fuel cell having an output power of up to 100 kW.

Patent application JP2008037692 (A) is also known, which relates to a PrOX reactor fed by a stream with a high H₂ concentration derived from a methanol reforming process comprising two PrOX reactors which may be disposed serially or in parallel with Pt catalyst beds having spiral-shaped heat exchangers disposed around the catalyst bed, where the heat exchangers use water to cool the gas stream having a high H₂ concentration.

International application WO2012066174 (A1) relative to an ethanol reforming unit incorporating sub-units for producing hydrogen to feed a fuel cell that propels a submarine is also known. The sub-units include several serially-disposed PrOX reactors, also including intermediate micro heat exchangers disposed between said PrOX reactors to cool the gas derived therefrom by preheating and/or evaporating water and/or ethanol from the process. The output stream obtained from this PrOX reactor achieves a reduction in CO concentration to levels of up to 30 ppm and allows feeding of a fuel cell having an output power of up to 100 kW.

The previously described PrOX reactors that use water evaporated during the phase change as a coolant for the catalyst beds have the drawback that the liquid water is not separated after the heat exchange and cannot be returned to the reactor, whereupon the vapour still contains drops carried over therewith. Additionally, there may be cases where the water levels required in the PrOX reactor are not those required for the proper functioning thereof.

Also, the PrOX reactors of the state of the art are not designed to occupy a volume of less than 0.45 m³, preferably less than 0.3 m³ operating under conditions which allow feeding of a fuel cell having an output power of up to 600 kW, preferably up to 300 kW or, in other words, occupying a smaller volume than the reactors of the state of the art for the same output power, due to which they are not appropriate for marine applications, such as for example submarines, as this type of applications have volume constraints, only achieving a reduction in CO concentration to levels of approximately 20 ppm, not reaching levels of 5-10 ppm.

From the state of the art it is known document EP2455334 which relates to an ethanol processing system for generating a hydrogen gas-rich reformed gas stream comprising an integrated reformer which in turn comprises an adiabatic pre-reformer in which the ethanol is catalytically transformed into methane, hydrogen, carbon monoxide and carbon dioxide; and an isothermal reformer in which the methane contained in the pre-reformed gas stream obtained in the pre-reformer is catalytically converted into hydrogen; and a catalytic combustor providing the thermal energy required by the reformer. It also discloses a process for reforming ethanol which uses said ethanol processing system.

### DESCRIPTION OF THE INVENTION

The present invention relates to a CO preferential oxidation reactor for purifying H₂-rich streams, as a stage prior to feeding a fuel cell, integrated with a heat exchanger that uses the heat generated in the exothermic preferential oxidation reaction for water evaporation. It is disclosed a CO preferential oxidation reactor that carries out the purification of H₂-rich streams derived from organic fuel reforming processes, such as for example reforming of ethanol or bioethanol, as a stage prior to feeding a fuel cell. The only difference between bioethanol and ethanol is that the former is a biofuel of vegetable origin.

Additionally, the preferential oxidation reactor of the present invention fulfils at all times the water level requirements for the equipment to operate correctly and optimally at different degrees of inclination.

The preferential oxidation reactor of the present invention has a volume of less than 0.45 m³, preferably less than 0.3 m³ operating under conditions which allow feeding of a fuel cell having an output power of up to 600 kW, preferably up to 300 kW or, in other words, occupying a smaller volume than the reactors of the state of the art for the same output power, solving the technical problem of achieving operation at these output power ranges in very small spaces, therefore being appropriate for marine applications, such as for example in submarines, as they are applications with heavy space constraints, achieving a reduction in CO concentration to levels of up to 5-10 ppm.

The CO preferential oxidation reactor comprises at least a first heat exchanger for cooling a gas stream with a high H₂ concentration, prior to carrying out the reaction stage, by means of a water stream that is transformed into a steam stream and at least a first CO preferential oxidation reactor module having at least one catalyst bed for carrying out the purification of the gas stream with a high H₂ concentration, by means of a pure O₂ stream that is injected at the inlet of the first CO preferential oxidation reactor module.

The temperature of the output gas stream with a high H₂ concentration from the first heat exchanger is in the range of 110 ºC-160 ºC, more preferably 120 ºC-150 ºC and, more preferably, 135 ºC.

Optionally, in order to improve the mixture of the O₂ stream with the gas stream with a high H₂ concentration and prevent the existence of high O₂ concentration areas and, consequently, reduce the risk of H₂ ignition, the preferential oxidation reactor comprises at least one system for injecting the O₂ stream in the gas stream with a high H₂ concentration, which is composed of at least one feed duct and, optionally, at least one static mixer in the injection area which prevents combustion from taking place before the catalyst bed.

The first heat exchanger that cools the gas stream with a high H₂ concentration by means of the water stream is of the shell and tube type, where the gas stream with a high H₂ concentration circulates through the interior of the tubes and the water circulates between the tubes and the shell

Optionally, the heat exchanger tubes may have longitudinal fins in the interior thereof to favour heat exchange. These longitudinal fins may be manufactured from different materials such as copper, stainless steel or aluminium.

The CO preferential oxidation reactor may also comprise a drop separation device or downcomer disposed at the outlet of the steam stream from the first heat exchanger, which prevents said steam stream from carrying drops of liquid water outside of the preferential oxidation reactor.

Therefore, said drop-free steam stream may be used in an organic fuel reforming process, preferably ethanol, where the water condensed in the drop separation device or downcomer returns to the first heat exchanger through a return duct.

Additionally, the CO preferential oxidation reactor may comprise at least two level sensors, a high level sensor and a low level sensor that ensure that all the tubes of the first heat exchanger are submerged in liquid water for the different degrees of inclination with respect to the horizontal plane required by the type of naval or marine application, thereby avoiding situations in which the heat exchange is not carried out between the liquid water and the stream with a high H₂ concentration, where preferably, the maximum degrees of inclination are ±45º with respect to the horizontal plane.

The sensors are optionally of the all-or-nothing type, i.e. the low level sensor is activated during equipment start-up and its main function is to maintain the water level at a low level to favour start-up by fast equipment warm-up.

The high level sensor guarantees that, during the operating phase, the water level is sufficiently high for the tubes to always be submerged, achieving effective heat transfer, in such a manner that the liquid water fed to the heat exchanger is regulated in order to maintain the level at the high level sensor position.

During reactor start-up, when it is warming up to its operating temperature, the liquid water level is maintained at the low level sensor position, with the objective of favouring fast equipment warm-up, where the low level sensor is disposed in the first heat exchanger and the high level sensor is disposed in the drop separation device or downcomer.

The reactor also comprises a second heat exchanger, a second CO preferential oxidation reactor module, a third heat exchanger disposed at the outlet of the second preferential oxidation reactor module, a third preferential oxidation reactor module and O₂ feeding means.

The total number of tubes of the three heat exchangers is integrated in a single cylindrical shell where the tubes are disposed longitudinally. An inlet manifold that feeds the reformate gas to the heat exchange and flow distribution tubes is disposed on one of the bases of the cylindrical shell. An outlet manifold that collects the reformate gas that flows out of the tubes and feeds it to each of the CO preferential oxidation reactor modules is disposed on the other base of the cylindrical shell.

### DESCRIPTION OF THE DRAWINGS

In order to complement the description being made and with the object of helping to better understand the characteristics of the invention, in accordance with a preferred embodiment thereof, said description is accompanied, as an integral part thereof, by a set of drawings where, in an illustrative and non-limiting manner, the following has been represented:
Figure 1 shows a schematic view of the CO preferential oxidation reactor of the present invention.
Figure 2 shows a perspective view of the CO preferential oxidation reactor of the present invention.
Figure 3 shows a sectional perspective view of the preferential oxidation reactor shown in figure 2.
Figure 4 shows another partially sectional perspective view of the preferential oxidation reactor shown in figure 3.
Figure 5 shows a sectional view of a first embodiment of the drop separation device or downcomer disposed at the outlet of the steam stream from the first heat exchanger.
Figure 6 shows a sectional view of a second embodiment of the drop separation device or downcomer disposed at the outlet of the steam stream from the first heat exchanger.

### PREFERRED EMBODIMENT OF THE INVENTION

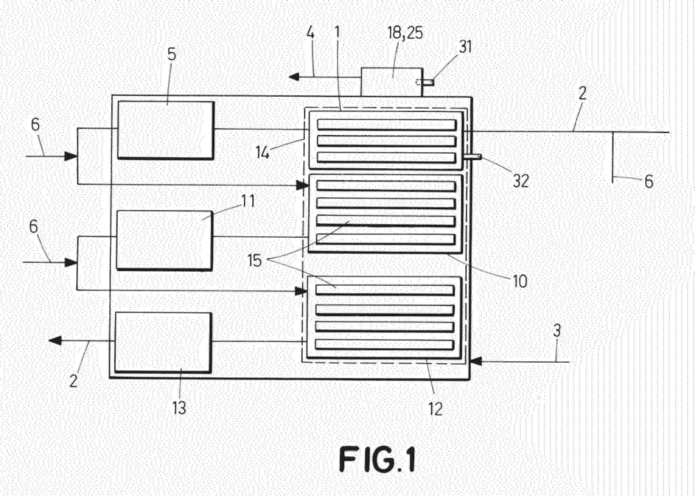

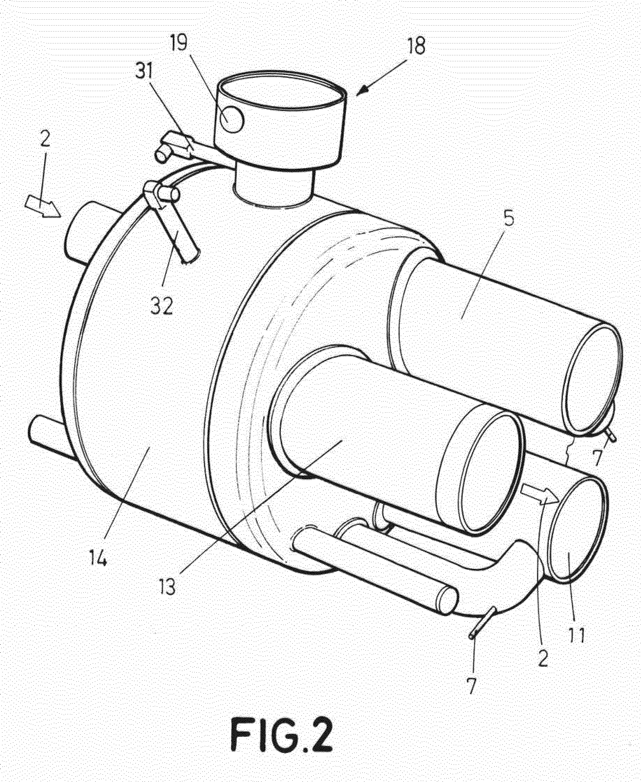

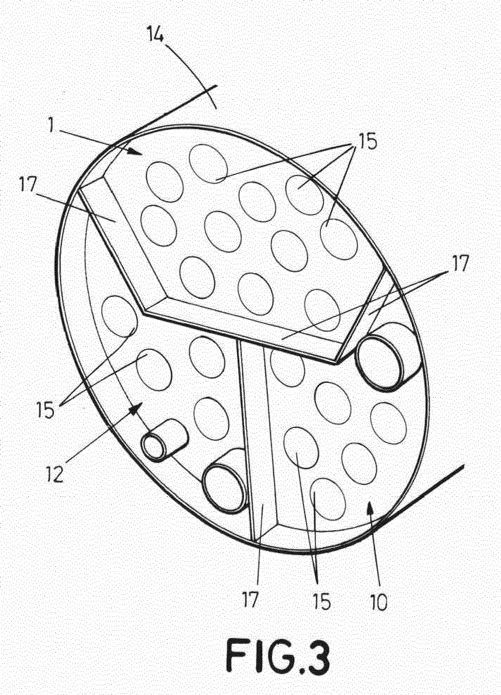

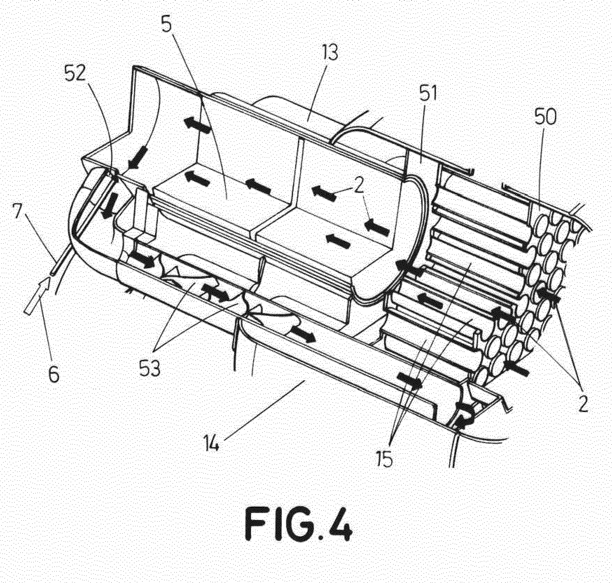

Following is a detailed description, in light of the aforementioned figures 1 to 6, of a preferred embodiment of the invention.

The present invention solves the technical problem raised by means of a CO preferential oxidation reactor comprising a first heat exchanger (1) for partially cooling a gas stream with a high H₂ concentration (2) by means of a water stream (3) that is transformed into a steam stream (4), followed by a first CO preferential oxidation reactor module (5) having a catalyst bed, for carrying out a partial purification of the gas stream with a high H₂ concentration (2) by feeding a pure O₂ stream that is injected in the inlet pipe of the gas stream with a high H₂ concentration (2) of the first heat exchanger (1).

The temperature of the output gas stream with a high H₂ concentration (2) from the first heat exchanger (1) is in the range of 110 ºC-160 ºC, more preferably 120 ºC-150 ºC and, more preferably, 135 ºC.

The reactor also comprises a second heat exchanger (10) disposed at the outlet of the first preferential oxidation reactor module (5) for cooling the gas stream with a high H₂ concentration (2) by means of the water stream (3) that is transformed into a steam stream (4), followed by a second CO preferential oxidation reactor module (11) having a catalyst bed, wherein the partial purification of the gas stream with a high H₂ concentration (2) continues by feeding a pure O₂ stream (6) that is injected at the outlet of the first preferential oxidation reactor module (5), prior to the inlet of the second heat exchanger (10).

The temperature of the output gas stream with a high H₂ concentration (2) from the second heat exchanger (10) is in the range of 110 ºC-160 ºC, more preferably 120 ºC-150 ºC and, more preferably, 135 ºC.

The reactor also comprises a third heat exchanger (12) disposed at the outlet of the second preferential oxidation reactor module (11) for cooling the gas stream with a high H₂ concentration (2) by means of the water stream (3) that is transformed into a steam stream (4), followed by a third preferential oxidation reactor module (13) having a catalyst bed, wherein the partial purification of the gas stream with a high H₂ concentration (2) continues by feeding a pure O₂ stream (6) that is injected at the outlet of the second preferential oxidation reactor module (11), prior to the inlet of the third heat exchanger (12).

The temperature of the output gas stream with a high H₂ concentration (2) from the third heat exchanger is in the range of 110 ºC-160 ºC, more preferably 120 ºC-150 ºC and, more preferably, 135 ºC.

In a preferred embodiment, the preferential oxidation reactor consists of a unit formed by three CO preferential oxidation reactor modules (5, 11, 13), wherein the CO preferential oxidation catalytic reaction of a reformate gas stream with a high H₂ concentration (2) takes place, and three heat exchangers (1, 10, 12) disposed prior to the inlet of each bed (5, 11, 13), with the objective of reducing the temperature of the reformate gas until reaching the optimum reaction temperature. The cooling fluid may be water (3) undergoing a phase change.

The heat exchangers (1, 10, 12) are of the tube (15) and shell (14) type, wherein the reformate gas flow to be purified circulates through the interior of the tubes (15), while the cooling water (3) flow circulates through the volume comprised between the tubes (15) and the shell (14).

In order to achieve a higher degree of compaction, the total number of tubes (15) of the three heat exchangers (1, 10, 12) is integrated in a single shell (14), wherein the shell (14) is cylindrical and the tubes (15) are disposed longitudinally inside said shell (14).

The diameter of the cylindrical shell (14) is limited so that the unit may preferably be extracted through the hatch of a submarine having a diameter of less than 800 mm.

An inlet manifold that feeds the reformate gas (2) to the heat exchange and flow distribution tubes (15) is disposed on one of the bases of the cylindrical shell (14), while an outlet manifold that collects the reformate gas (2) that flows out of the tubes and feeds it to each of the CO preferential oxidation reactor modules (5, 11, 13) is disposed on the other base of the cylindrical shell.

The outlet manifold extends, internally to the shell (14), from the heat exchange tubes (15) to one of the bases of the cylindrical shell (14), where the heat exchange tubes (15) are divided into three independent compartments by means of partitions (17).

In order to separate the outlet manifold from the area of the shell (14) where the heat exchange tubes (15) are disposed, the preferential oxidation reactor comprises, at the end of the partitions (17) in contact with the tubes (15), a first perforated plate (50) having the same diameter as the cylindrical shell (15), whose orifices coincide in number and diameter with the tubes (15).

Each internal compartment of the inlet manifold feeds and distributes the reformate gas (2) flow to the tubes (15) of each of the heat exchangers (1, 10, 12), in such a manner that the three internal compartments of the inlet manifold correspond to each of the three heat exchangers (1, 10, 12) integrated in the shell (14).

Each CO preferential oxidation reactor module (5, 11, 13) consists of a cylinder in whose interior the catalyst is disposed for the preferential CO reaction. A second perforated plate (51), whose orifices coincide in diameter and number with the cylinders of the three CO preferential oxidation reactor modules (5, 11, 13) is disposed at the end of the outlet manifold, opposite the position of the first perforated plate (50). The three cylinders corresponding to the CO preferential oxidation reactor modules (5, 11, 13) are coupled to the orifices of this second perforated plate (51) of the outlet manifold that collects the outflow from the tubes (15).

Similarly to the inlet manifold, each internal compartment of the outlet manifold receives the reformate gas (2) flow from the tubes (15) of each heat exchanger (1, 10, 12) and feeds it to each of the CO preferential oxidation reactor modules (5, 11, 13) coupled to the outlet manifold.

The reformate gas (2) flow, which may derive from previous purification stages of an ethanol reforming system, is fed into the first compartment of the inlet manifold through a connection disposed on one of the bases of the cylindrical shell. In this first compartment, the reformate gas flow is distributed and fed uniformly to the tubes (15) of the first heat exchanger (1) prior to the first CO preferential oxidation reactor module (5).

At the outlet of the tubes (15) of the first heat exchanger (1), the reformate gas (2) flows into the first compartment of the outlet manifold and is fed to the first CO preferential oxidation reactor module (5). A first reformate gas (2) return pipe to the inlet manifold is disposed on the side of the opposite end of the cylinder of the first CO preferential oxidation reactor module (5), which is not coupled to the outlet manifold.

In order to maximise the degree of compaction of the assembly and avoid the existence of a series of external pipes, this first return pipe passes through the outlet manifold and heat exchange area of the shell (14) longitudinally, ending in the second compartment of the inlet manifold.

The necessary oxygen (6) for the second CO preferential oxidation reactor module (11) is injected in the first reformate gas return pipe through a first feed pipe (7) that is inserted into the elbow of the return pipe, said elbow being necessary for changing the direction of the return pipe towards the inlet manifold.

A set of blades (52) are coupled to the outlet of the first feed pipe (7) to favour the homogenous mixture of the reformate gas (2) and the oxygen (6) at the outlet of the first CO preferential oxidation reactor module (5). Further, a static mixer (53) consisting of a series of spiral-shaped flow deflectors is disposed in the interior of the first return pipe to complete the mixing process, guaranteeing the homogeneous mixture of the reformate gas stream with a high H₂ concentration (2) and the pure O₂ stream (6), preventing combustion from occurring before the second catalyst bed (11).

In the second compartment of the inlet manifold, the reformate gas (2) flowing out of the first return pipe from the first CO preferential oxidation reactor module (5) is distributed and fed to the tubes (15) of the second heat exchanger (10) prior to the second CO preferential oxidation reactor module (11).

At the outlet of the tubes of the second heat exchanger (10), the reformate gas (2) flows into the second compartment of the outlet manifold and is fed to the second CO preferential oxidation reactor module (11). A second reformate gas return pipe to the inlet manifold is disposed on the side of the opposite end of the cylinder of the second CO preferential oxidation reactor module (11), which is not coupled to the outlet manifold. Once again, in order to maximise the degree of compaction of the assembly and avoid the existence of a series of external pipes, this second return pipe passes through the outlet manifold and heat exchange area of the shell (14) longitudinally, ending in the third compartment of the inlet manifold.

The necessary oxygen (6) for the second CO preferential oxidation reactor module (11) is injected into the second reformate gas return pipe by means of a second feed pipe that is inserted into the elbow of the return pipe, said elbow being necessary for changing the direction of the return pipe towards the inlet manifold. A set of blades are coupled to the outlet of the second feed pipe to favour the homogenous mixture of the reformate gas and the oxygen at the outlet of the first CO preferential oxidation reactor module. Further, a static mixer consisting of a series of spiral-shaped flow deflectors is disposed in the interior of the second return pipe to complete the mixing process.

In the third compartment of the inlet manifold, the reformate gas (2) flowing out of the second return pipe from the second CO preferential oxidation reactor module (11) is distributed and fed to the tubes of the third heat exchanger (12) prior to the third CO preferential oxidation reactor module (13).

At the outlet of the tubes of the third heat exchanger (12), the reformate gas (2) flows into the third compartment of the outlet manifold and is fed to the third CO preferential oxidation reactor module (13). A reformate gas output connection, which will feed other subsequent stages of the ethanol reforming system, is disposed on the stop of the opposite end of the cylinder of the third CO preferential oxidation reactor module (13), which is not coupled to the outlet manifold.

The cooling water (3) is introduced in the interior of the shell by means of an input connection disposed at the bottom of the shell (14). In order to guarantee that the liquid water level is adequate during all possible inclinations of the submarine, so as to prevent the tubes from losing contact with the boiling water, two level sensors have been incorporated in two different positions, which will be described later in the text.

The CO preferential oxidation reactor also comprises, optionally, a drop separation device or downcomer (18, 25) disposed at the outlet of the steam stream (4) from the shell (14) disposed on the upper part of said shell (14), which prevents said steam stream from carrying drops of liquid water (22) outside of the CO preferential oxidation reactor, separating the liquid water in the form of drops (22) from the steam (4) stream. The liquid water in the form of drops (22) returns to the shell (14) through a duct (24, 29) that connects the drop separation device or downcomer (18, 25) to the interior of the shell (14).

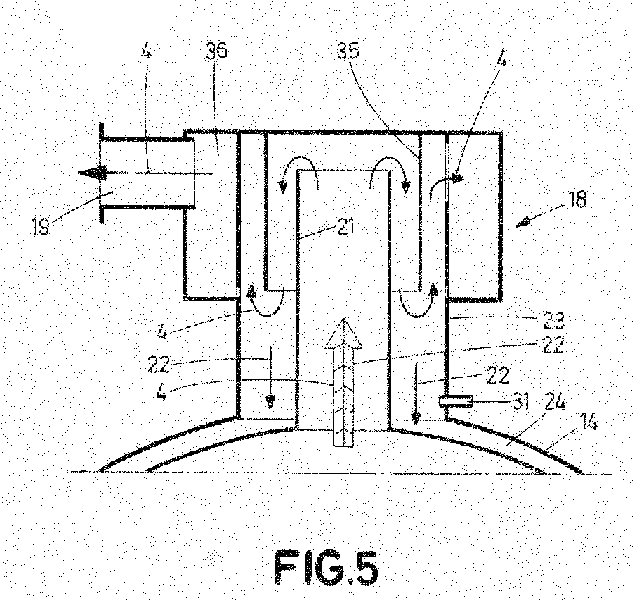

In a first preferred embodiment shown in figure 5, the drop separation device or downcomer (18) comprises a central duct (21) wherethrough the mixture of steam (4) and drops of liquid water (22) ascends.

There is a first concentric duct (35) to the central duct (21), which is larger in diameter. Said first concentric duct (35) is closed along its upper part. The fluid ascends through the central duct (21) until reaching the closure of the upper part of the concentric duct (35), which forces a change in the direction of the flow, forcing it to descend through the radial clearance existing between the central duct (21) and the first concentric duct (35). When the fluid reaches the lower part of the first concentric duct (35), the separation between the steam (4) and the drops of liquid water (22) takes place. The drops of liquid water (22) return to the interior of the shell (14) through a return pipe (24), while the steam (4) modifies its direction of flow once again, ascending through a radial clearance existing between the first concentric duct (35) and a second concentric duct (23).

When the steam (4) reaches the upper closure of the second concentric duct (23), it is forced to pass through orifices made in the wall of this duct to arrive at an outlet manifold (36) joined to an outlet duct (19), wherethrough the steam (4) will flow out.

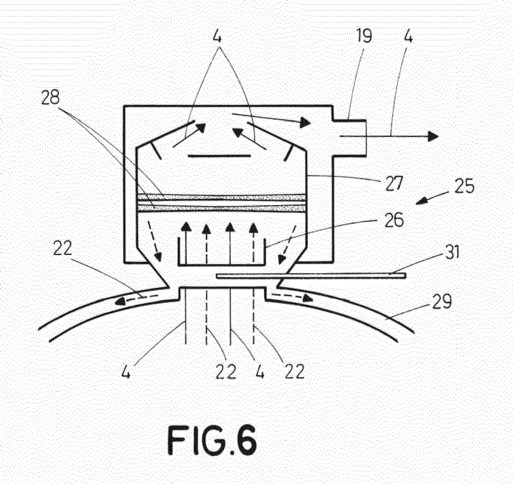

In a second preferred embodiment shown in figure 6, the drop separation device or downcomer (25) comprises a central duct (26) wherethrough the mixture of steam (4) and drops of liquid water (22) ascends, which is surrounded by a concentric duct (27) having a larger diameter. This concentric duct (27) is separated into two parts by means of at least one static propeller (28) that prevents the passage of the drops of liquid water (22) that descend through a return pipe (29) that connects the drop separation device or downcomer (25) to the interior of the shell (14). The static propeller (28) allows the passage of steam (4) so that it flows out of the drop separation device or downcomer (25) through an outlet duct (19).

Additionally, the preferential oxidation reactor comprises two level sensors, a high level sensor (31) and a low level sensor (32), where preferably the low level sensor (32) is disposed in the first heat exchanger (1) and the high level sensor (31) is disposed in the drop separation device or downcomer (18, 25).

Under nominal operating conditions, the water level is maintained in the position of the high level sensor (31), guaranteeing that all the tubes of the heat exchangers (1, 10, 12) are submerged in liquid water for the different degrees of inclination required by the type of naval or marine application, where the maximum degrees of inclination are preferably ±45º with respect to the horizontal plane. During reactor start-up, when it is warming up to its operating temperature, the liquid water level is maintained in the position of the low level sensor (32), with the objective of favouring fast warm-up of the equipment.

The preferential oxidation reactor thus configured allows a reduction in CO concentration of a gas stream with a high H₂ concentration having an initial concentration of CO of up to 1%v (dry base) for a nominal flow rate of up to 945 kg/h, preferably of up to 465 kg/h at a temperature preferably between 300 ºC and 350 ºC, at levels of between 5 and 20 ppmv (dry base), making it possible to use said gas stream with a high H₂ concentration to feed a PEM-type fuel cell of up to 600 kW, preferably up to 300 kW, while generating a flow rate of 110-200 kg/h of saturated steam at a temperature in the range of 110 ºC-160 ºC, preferably in the range of 130 ºC-140 ºC, using a reactor with a volume of less than 0.45 m³, preferably less than 0.3 m³. Additionally, under operating conditions, the flow rate may be to the order of 20-25% of the nominal flow rate.

## Claims

1. A CO preferential oxidation reactor comprising:
• a first heat exchanger (1) for partially cooling a gas stream with a high H₂ concentration (2) by means of a water stream (3) that is transformed into a steam stream (4), followed by a first CO preferential oxidation reactor module (5) having a catalyst bed, for carrying out the partial purification of the gas stream with a high H₂ concentration (2) by feeding a pure O₂ stream that is injected by feeding means in the inlet pipe of the gas stream with a high H2 concentration (2) of the first heat exchanger (1),
• a second heat exchanger (10) disposed at the outlet of the first preferential oxidation reactor module (5) for cooling the gas stream with a high H₂ concentration (2) by means of a water stream (3) that is transformed into a steam stream (4), followed by a second CO preferential oxidation reactor module (11) having a catalyst bed, wherein the partial purification of the gas stream with a high H₂ concentration (2) continues by feeding a pure O₂ stream (6) that is injected by feeding means at the outlet of the first preferential oxidation reactor module (5), prior to the inlet of the second heat exchanger (10), and
• a third heat exchanger (12) disposed at the outlet of the second preferential oxidation reactor module (11) for cooling the gas stream with a high H₂ concentration (2) by means of the water stream (3) that is transformed into a steam stream (4), followed by a third preferential oxidation reactor module (13) having a catalyst bed, wherein the partial purification of the gas stream with a high H₂ concentration (2) continues by feeding a pure O₂ stream (6) that is injected by feeding means at the outlet of the second preferential oxidation reactor module (11), prior to the inlet of the third heat exchanger (12),
**characterised in that** the total number of tubes (15) of the three heat exchangers (1, 10, 12) is integrated in a single shell (14), wherein the shell (14) is cylindrical and the tubes (15) are disposed longitudinally inside said shell (14), wherein an inlet manifold that feeds the reformate gas (2) to the heat exchange and flow distribution tubes (15) is disposed on one of the bases of the cylindrical shell (14), while an outlet manifold that collects the reformate gas (2) that flows out of the tubes and feeds it to each of the CO preferential oxidation reactor modules (5, 11, 13) is disposed on the other base of the cylindrical shell.

2. CO preferential oxidation reactor, according to claim 1, **characterised in that** it comprises a drop separation device or downcomer (18, 25) disposed at the outlet of the steam stream from the first heat exchanger (1).

3. CO preferential oxidation reactor, according to claim 2, **characterised in that** the drop separation device or downcomer (18, 25) comprises a return duct (24, 29) wherethrough the condensed water returns to the first heat exchanger (1).

4. CO preferential oxidation reactor, according to claim 3, **characterised in that** the drop separation device or downcomer (18, 25) comprises a central duct (21, 26) wherethrough the mixture of steam (4) and drops of liquid water (22) ascends, which is surrounded by a concentric duct (23, 27) having a larger diameter.

5. CO preferential oxidation reactor, according to claim 4, **characterised in that** the drop separation device or downcomer (18) comprises a first concentric duct (35) to the central duct (21), having a larger diameter than the central duct (21) and closed along its upper part, wherethrough the mixture of steam (4) and drops of liquid water (22) ascends, and a radial clearance present between the central duct (21) and the first concentric duct (35) wherethrough the mixture descends.

6. CO preferential oxidation reactor, according to claim 5, **characterised in that** the drop separation device or downcomer (18) comprises a radial clearance existing between the first concentric duct (35) and a second concentric duct (23), wherethrough the steam (4) ascends.

7. CO preferential oxidation reactor, according to claim 6, **characterised in that** the first concentric duct (35) of the drop separation device or downcomer (18) comprises orifices disposed on its wall that connect it to an outlet manifold (36) that collects steam (4).

8. CO preferential oxidation reactor, according to claim 4, **characterised in that** the drop separation device or downcomer (25) comprises a concentric duct (27) to the central duct (26) which is separated into two parts by means of at least one static propeller (28) that prevents the passage of the drops of liquid water (22) that descend through the duct (29) that connects the drop separation device or downcomer (25) to the interior of the shell (14).

9. CO preferential oxidation reactor, according to any of claims 2 to 8, **characterised in that** it comprises at least two level sensors (31, 32), a high level sensor (31) and a low level sensor (32), to ensure that all the tubes of the first heat exchanger are submerged in liquid water.

10. CO preferential oxidation reactor, according to claim 9, **characterised in that** the level sensors (31, 32) detect maximum degrees of inclination of ±45º with respect to a horizontal plane.

11. CO preferential oxidation reactor, according to any of claims 9 or 10, **characterised in that** the level sensors (31, 32) are of the all-or-nothing type.

12. CO preferential oxidation reactor, according to any of claims 9 to 11, **characterised in that** the low level sensor (32) is disposed in the first heat exchanger (1) and the high level sensor (31) is disposed in the drop separation device or downcomer (18, 25).

13. CO preferential oxidation reactor, according to any of the preceding claims, **characterised in that** the outlet manifold extends, internally to the shell (14), from the heat exchange tubes (15) to one of the bases of the cylindrical shell (14), where the heat exchange tubes (15) are divided into three independent compartments by means of partitions (17).

14. CO preferential oxidation reactor, according to claim 13, **characterised in that** it comprises, at the end of the partitions (17) in contact with the tubes (15), a first perforated plate (50) having the same diameter as the cylindrical shell (14), whose orifices coincide in number and diameter with the tubes (15).

15. CO preferential oxidation reactor, according to claim 14, **characterised in that** the inlet manifold comprises internal compartments for feeding and distributing the reformate gas (2) flow to the tubes (15) of each of the heat exchangers (1, 10, 12), so that the three internal compartments of the inlet manifold correspond to each of the three heat exchangers (1, 10, 12) integrated in the shell (14).

16. CO preferential oxidation reactor, according to claim 15, **characterised in that** it comprises a second perforated plate (15) disposed at the end of the outlet manifold, opposite the position of the first perforated plate (50).

17. CO preferential oxidation reactor, according to claim 15, **characterised in that** a first reformate gas (2) return pipe to the inlet manifold is disposed on the side of the opposite end of the cylinder of the first CO preferential oxidation reactor module (5), which is not coupled to the outlet manifold.

18. CO preferential oxidation reactor, according to any of the preceding claims, **characterised in that** the heat exchange tubes (1, 10, 12) have longitudinal fins in the interior thereof.

## Patentansprüche

1. Reaktor zur präferentiellen Oxidation von CO, der Folgendes umfasst:
• einen ersten Wärmetauscher (1) zum teilweisen Kühlen eines Gasstroms mit einer hohen H₂-Konzentration (2) mittels eines Wasserstroms (3), der in einen Dampfstrom (4) umgewandelt wird, gefolgt von einem ersten Reaktormodul (5) zur präferentiellen Oxidation von CO mit einem Katalysatorbett zum Durchführen der teilweisen Reinigung des Gasstroms mit einer hohen H₂-Konzentration (2) durch Zuführen eines reinen O₂-Stroms, der durch eine Zufuhrvorrichtung in das Einlassrohr des Gasstroms mit einer hohen H₂-Konzentration (2) des ersten Wärmetauschers (1) eingespritzt wird,
• einen zweiten Wärmetauscher (10), der am Auslass des ersten Reaktormoduls (5) zur präferentiellen Oxidation zum Kühlen des Gasstroms mit einer hohen H₂-Konzentration (2) mittels eines Wasserstroms (3) angeordnet ist, der in einen Dampfstrom (4) umgewandelt wird, gefolgt von einem zweiten Reaktormodul (11) zur präferentiellen Oxidation von CO mit einem Katalysatorbett, wobei die teilweise Reinigung des Gasstroms mit einer hohen H₂-Konzentration (2) durch Zuführen eines reinen O₂-Stroms (6) fortgesetzt wird, der durch eine Zufuhrvorrichtung am Auslass des ersten Reaktormoduls (5) zur präferentiellen Oxidation vor dem Einlass des zweiten Wärmetauschers (10) eingespritzt wird, und
• einen dritten Wärmetauscher (12), der am Auslass des zweiten Reaktormoduls (11) zur präferentielle Oxidation zum Kühlen des Gasstroms mit einer hohen H₂--Konzentration (2) mittels des Wasserstroms (3) angeordnet ist, der in einen Dampfstrom (4) umgewandelt wird, gefolgt von einem dritten Reaktormodul (13) zur präferentiellen Oxidation mit einem Katalysatorbett, wobei die teilweise Reinigung des Gasstroms mit einer hohen H₂-Konzentration (2) durch Zuführen eines reinen O₂-Stroms (6) fortgesetzt wird, der durch eine Zufuhrvorrichtung am Auslass des zweiten Reaktormoduls (11) zur präferentiellen Oxidation vor dem Einlass des dritten Wärmetauschers (12) eingespritzt wird,
**dadurch gekennzeichnet, dass** die Gesamtzahl der Rohre (15) der drei Wärmetauscher (1, 10, 12) in einem einzigen Gehäuse (14) integriert ist, wobei das Gehäuse (14) zylindrisch ist und die Rohre (15) längs innerhalb des Gehäuses (14) angeordnet sind, wobei ein Einlasskrümmer, der den Wärmetausch- und Strömungsverteilungsrohren (15) das wasserstoffreiche Gasgemisch (2) zuführt, auf einem der Böden des zylindrischen Gehäuses (14) angeordnet ist, während ein Auslasskrümmer, der das aus den Rohren strömende wasserstoffreiche Gasgemisch (2) sammelt und es jedem der Reaktormodule (5, 11, 13) zur präferentiellen Oxidation von CO zuführt, auf dem anderen Boden des zylindrischen Gehäuses angeordnet ist.

2. Reaktor zur präferentiellen Oxidation von CO gemäß Anspruch 1, **dadurch gekennzeichnet, dass** er eine Vorrichtung zur Abscheidung von Tropfen oder einen Downcomer (18, 25) umfasst, die/der am Auslass des Dampfstroms aus dem ersten Wärmetauscher (1) angeordnet ist.

3. Reaktor zur präferentiellen Oxidation von CO gemäß Anspruch 2, **dadurch gekennzeichnet, dass** die Vorrichtung zur Abscheidung von Tropfen oder der Downcomer (18, 25) eine Rückführleitung (24, 29) umfasst, durch die das kondensierte Wasser zu dem ersten Wärmetauscher (1) zurückgeführt wird.

4. Reaktor zur präferentiellen Oxidation von CO gemäß Anspruch 3, **dadurch gekennzeichnet, dass** die Vorrichtung zur Abscheidung von Tropfen oder der Downcomer (18, 25) eine zentrale Leitung (21, 26) umfasst, durch die das Gemisch aus Dampf (4) und Tropfen flüssigen Wassers (22) aufsteigt und die von einer konzentrischen Leitung (23, 27) mit einem größeren Durchmesser umgeben ist.

5. Reaktor zur präferentiellen Oxidation von CO gemäß Anspruch 4, **dadurch gekennzeichnet, dass** die Vorrichtung zur Abscheidung von Tropfen oder der Downcomer (18) eine erste konzentrische Leitung (35) zu der zentralen Leitung (21) umfasst, die einen größeren Durchmesser als die zentrale Leitung (21) aufweist und entlang ihres oberen Teils geschlossen ist, wodurch das Gemisch aus Dampf (4) und Tropfen flüssigen Wassers (22) aufsteigt, und einen radialen zwischen der zentralen Leitung (21) und der ersten konzentrischen Leitung (35) vorliegenden Zwischenraum, durch den das Gemisch absteigt.

6. Reaktor zur präferentiellen Oxidation von CO gemäß Anspruch 5, **dadurch gekennzeichnet, dass** die Vorrichtung zur Abscheidung von Tropfen oder der Downcomer (18) einen radialen zwischen dem ersten konzentrischen Kanal (35) und einem zweiten konzentrischen Kanal (23) bestehenden Zwischenraum umfasst, durch den der Dampf (4) aufsteigt.

7. Reaktor zur präferentiellen Oxidation von CO gemäß Anspruch 6, **dadurch gekennzeichnet, dass** die erste konzentrische Leitung (35) der Vorrichtung zur Abscheidung von Tropfen oder des Downcomers (18) Öffnungen umfasst, die an ihrer Wand angeordnet sind und sie mit einem Auslasskrümmer (36) verbinden, der Dampf (4) sammelt.

8. Reaktor zur präferentiellen Oxidation von CO gemäß Anspruch 4, **dadurch gekennzeichnet, dass** die Vorrichtung zur Abscheidung von Tropfen oder der Downcomer (25) eine konzentrische Leitung (27) zu der zentralen Leitung (26) umfasst, die mittels mindestens eines statischen Antriebs (28) in zwei Teile getrennt ist, der den Durchgang der Tropfen flüssigen Wassers (22) verhindert, die durch die Leitung (29) absteigen, die die Vorrichtung zur Abscheidung von Tropfen oder der Downcomer (25) mit dem Inneren des Gehäuses (14) verbindet.

9. Reaktor zur präferentiellen Oxidation von CO gemäß einem der Ansprüche 2 bis 8, **dadurch gekennzeichnet, dass** er mindestens zwei Füllstand-Sensoren (31, 32), einen Hoch-Füllstand-Sensor (31) und einen Niedrig-Füllstand-Sensor (32) umfasst, um das Eintauchen aller Rohre des ersten Wärmetauschers in flüssiges Wasser sicherzustellen.

10. Reaktor zur präferentiellen Oxidation von CO gemäß Anspruch 9, **dadurch gekennzeichnet, dass** die Füllstand-Sensoren (31, 32) maximale Neigungsgrade von ±45° in Bezug auf eine horizontale Ebene erfassen.

11. Reaktor zur präferentiellen Oxidation von CO gemäß einem der Ansprüche 9 oder 10, **dadurch gekennzeichnet, dass** die Füllstand-Sensoren (31, 32) von dem Alles-oder-Nichts-Typ sind.

12. Reaktor zur präferentiellen Oxidation von CO gemäß einem der Ansprüche 9 bis 11, **dadurch gekennzeichnet, dass** der Niedrig-Füllstand-Sensor (32) im ersten Wärmetauscher (1) und der Hoch-Füllstand-Sensor (31) in der Vorrichtung zur Abscheidung von Tropfen oder dem Downcomer (18, 25) angeordnet sind.

13. Reaktor zur präferentiellen Oxidation von CO gemäß einem der vorhergehenden Ansprüche, **dadurch gekennzeichnet, dass** sich der Auslasskrümmer im Inneren des Gehäuses (14) von den Wärmetauschrohren (15) zu einem der Böden des zylindrischen Gehäuses (14) erstreckt, wobei die Wärmetauschrohre (15) mittels Trennwänden (17) in drei unabhängige Kammern unterteilt sind.

14. Reaktor zur präferentiellen Oxidation von CO gemäß Anspruch 13, **dadurch gekennzeichnet, dass** er am Ende der mit den Rohren (15) in Kontakt stehenden Trennwände (17) eine erste Lochplatte (50) mit dem gleichen Durchmesser wie das zylindrische Gehäuse (14) umfasst, deren Öffnungen in Anzahl und Durchmesser mit den Rohren (15) übereinstimmen.

15. Reaktor zur präferentiellen Oxidation von CO gemäß Anspruch 14, **dadurch gekennzeichnet, dass** der Einlasskrümmer innere Kammern zum Zuführen und Verteilen des Stroms des wasserstoffreichen Gasgemischs (2) an die Rohre (15) jedes der Wärmetauschers (1, 10, 12) umfasst, sodass die drei inneren Kammern des Einlasskrümmers jedem der drei in dem Gehäuse (14) integrierten Wärmetauscher (1, 10, 12) entsprechen.

16. Reaktor zur präferentiellen Oxidation von CO gemäß Anspruch 15, **dadurch gekennzeichnet, dass** er eine zweite Lochplatte (15) umfasst, die am Ende des Auslasskrümmers gegenüber der Position der ersten Lochplatte (50) angeordnet ist.

17. Reaktor zur präferentiellen Oxidation von CO gemäß Anspruch 15, **dadurch gekennzeichnet, dass** ein erstes Rückführrohr des wasserstoffreichen Gasgemisches (2) zum Einlasskrümmer auf der Seite des gegenüberliegenden Endes des Zylinders des ersten Reaktormoduls (5) zur präferentiellen Oxidation von CO angeordnet ist, das nicht an den Auslasskrümmer gekoppelt ist.

18. Reaktor zur präferentiellen Oxidation von CO gemäß einem der vorhergehenden Ansprüche, **dadurch gekennzeichnet, dass** die Wärmetauschrohre (1, 10, 12) in ihrem Inneren Längsrippen aufweisen.

## Revendications

1. Réacteur d'oxydation préférentielle de CO comprenant :
• un premier échangeur de chaleur (1) pour refroidir partiellement un flux de gaz avec une concentration élevée en H₂ (2) au moyen d'un flux d'eau (3) qui est transformé en un flux de vapeur (4), suivi d'un premier module de réacteur d'oxydation préférentielle de CO
(5) ayant un lit de catalyseur, pour mettre en oeuvre la purification partielle du flux de gaz avec une concentration élevée en H₂ (2) en alimentant un flux pur d'O₂ qui est injecté par des moyens d'alimentation dans le tuyau d'admission du flux de gaz avec une concentration élevée en H₂ (2) du premier échangeur de chaleur (1),
• un deuxième échangeur de chaleur (10) disposé à la sortie du premier module de réacteur d'oxydation préférentielle (5) pour refroidir le flux de gaz avec une concentration élevée en H₂ (2) au moyen d'un flux d'eau (3) qui est transformé en un flux de vapeur (4), suivi d'un deuxième module de réacteur d'oxydation préférentielle de CO (11) ayant un lit de catalyseur, dans lequel la purification partielle du flux de gaz avec une concentration élevée en H₂ (2) se poursuit en alimentant un flux pur d'O₂
(6) qui est injecté par des moyens d'alimentation à la sortie du premier module de réacteur d'oxydation préférentielle (5), avant l'entrée du deuxième échangeur de chaleur (10), et
• un troisième échangeur de chaleur (12) disposé à la sortie du deuxième module de réacteur d'oxydation préférentielle (11) pour refroidir le flux de gaz avec une concentration élevée en H₂ (2) au moyen du flux d'eau (3) qui est transformé en un flux de vapeur (4), suivi d'un troisième module de réacteur d'oxydation préférentielle de CO (13) ayant un lit de catalyseur, dans lequel la purification partielle du flux de gaz avec une concentration élevée en H₂ (2) se poursuit en alimentant un flux pur d'O₂ (6) qui est injecté par des moyens d'alimentation à la sortie du deuxième module de réacteur d'oxydation préférentielle (11), avant l'entrée du troisième échangeur de chaleur (12),
**caractérisé en ce que** le nombre total de tubes (15) des trois échangeurs de chaleur (1, 10, 12) est intégré dans une seule coque (14), dans lequel la coque (14) est cylindrique et les tubes (15) sont disposés longitudinalement à l'intérieur de ladite coque (14), dans lequel un collecteur d'admission qui alimente le gaz reformé (2) aux tubes d'échange de chaleur et de distribution d'écoulement (15) est disposé sur l'une des bases de la coque cylindrique (14), tandis qu'un collecteur de sortie qui collecte le gaz reformé (2) qui s'écoule des tubes et l'alimente à chacun des modules de réacteur d'oxydation préférentielle de CO (5, 11, 13) est disposé sur l'autre base de la coque cylindrique.

2. Réacteur d'oxydation préférentielle de CO, selon la revendication 1, **caractérisé en ce qu'**il comprend un dispositif de séparation en goutte à goutte ou conduite de descente (18, 25) disposé à la sortie du flux de vapeur du premier échangeur de chaleur (1).

3. Réacteur d'oxydation préférentielle de CO, selon la revendication 2, **caractérisé en ce que** le dispositif de séparation en goutte à goutte ou conduite de descente (18, 25) comprend un conduit de retour (24, 29) par lequel l'eau condensée retourne au premier échangeur de chaleur (1).

4. Réacteur d'oxydation préférentielle de CO, selon la revendication 3, **caractérisé en ce que** le dispositif de séparation en goutte à goutte ou conduite de descente (18, 25) comprend un conduit central (21, 26) par lequel le mélange de vapeur (4) et de gouttes d'eau liquide (22) monte, qui est entouré d'un conduit concentrique (23, 27) ayant un plus grand diamètre.

5. Réacteur d'oxydation préférentielle de CO, selon la revendication 4, **caractérisé en ce que** le dispositif de séparation en goutte à goutte ou conduite de descente (18) comprend un premier conduit concentrique (35) au conduit central (21), ayant un plus grand diamètre que le conduit central (21) et fermé le long de sa partie supérieure, par lequel le mélange de vapeur (4) et de gouttes d'eau liquide (22) monte, et un jeu radial présent entre le conduit central (21) et le premier conduit concentrique (35) par lequel le mélange descend.

6. Réacteur d'oxydation préférentielle de CO, selon la revendication 5, **caractérisé en ce que** le dispositif de séparation en goutte à goutte ou conduite de descente (18) comprend un jeu radial existant entre le premier conduit concentrique (35) et un deuxième conduit concentrique (23), par lequel la vapeur (4) monte.

7. Réacteur d'oxydation préférentielle de CO, selon la revendication 6, **caractérisé en ce que** le premier conduit concentrique (35) du dispositif de séparation en goutte à goutte ou conduite de descente (18) comprend des orifices disposés sur son mur qui le raccorde à un collecteur de sortie (36) qui collecte la vapeur (4).

8. Réacteur d'oxydation préférentielle de CO, selon la revendication 4, **caractérisé en ce que** le dispositif de séparation de goutte en goutte ou conduite de descente (25) comprend un conduit concentrique (27) au conduit central (26) qui est séparé en deux parties au moyen d'au moins un propulseur statique (28) qui empêche le passage des gouttes d'eau liquide (22) qui descendent par le conduit (29) qui raccorde le dispositif de séparation en goutte à goutte ou conduite de descente (25) à l'intérieur de la coque (14).

9. Réacteur d'oxydation préférentielle de CO, selon l'une quelconque des revendications 2 à 8, **caractérisé en ce qu'**il comprend au moins deux capteurs de niveau (31, 32), un capteur de niveau élevé (31) et un capteur de niveau bas (32), pour s'assurer que tous les tubes du premier échangeur de chaleur soient submergés dans de l'eau liquide.

10. Réacteur d'oxydation préférentielle de CO, selon la revendication 9, **caractérisé en ce que** les capteurs de niveau (31, 32) détectent des degrés maximum d'inclinaison de ±45° par rapport à un plan horizontal.

11. Réacteur d'oxydation préférentielle de CO, selon l'une quelconque des revendications 9 ou 10, **caractérisé en ce que** les capteurs de niveau (31, 32) sont du type tout ou rien.

12. Réacteur d'oxydation préférentielle de CO, selon l'une quelconque des revendications 9 à 11, **caractérisé en ce que** le capteur de niveau bas (32) est disposé dans le premier échangeur de chaleur (1) et le capteur de niveau élevé (31) est disposé dans le dispositif de séparation en goutte à goutte ou conduite de descente (18, 25).

13. Réacteur d'oxydation préférentielle de CO, selon l'une quelconque des revendications précédentes, **caractérisé en ce que** le collecteur de sortie s'étend, intérieurement à la coque (14), des tubes d'échange de chaleur (15) à l'une des bases de la coque cylindrique (14), où les tubes d'échange de chaleur (15) sont divisés en trois compartiments indépendants au moyen de cloisons (17).

14. Réacteur d'oxydation préférentielle de CO, selon la revendication 13, **caractérisé en ce qu'**il comprend, à l'extrémité des cloisons (17) en contact avec les tubes (15), une première plaque perforée (50) ayant le même diamètre que la coque cylindrique (14), dont les orifices coïncident en nombre et en diamètre avec les tubes (15).

15. Réacteur d'oxydation préférentielle de CO, selon la revendication 14, **caractérisé en ce que** le collecteur d'admission comprend des compartiments internes pour alimenter et distribuer l'écoulement de gaz reformé (2) aux tubes (15) de chacun des échangeurs de chaleur (1, 10, 12), de sorte que les trois compartiments internes du collecteur d'admission correspondent à chacun des trois échangeurs de chaleur (1, 10, 12) intégrés dans la coque (14).

16. Réacteur d'oxydation préférentielle de CO, selon la revendication 15, **caractérisé en ce qu'**il comprend une deuxième plaque perforée (15) disposée à l'extrémité du collecteur de sortie, en regard de la position de la première plaque perforée (50).

17. Réacteur d'oxydation préférentielle de CO, selon la revendication 15, **caractérisé en ce qu'**un premier tuyau de retour de gaz reformé (2) au collecteur d'admission est disposé sur le côté de l'extrémité opposée du cylindre du premier module de réacteur d'oxydation préférentielle de CO (5), qui n'est pas couplé au collecteur de sortie.

18. Réacteur d'oxydation préférentielle de CO, selon l'une quelconque des revendications précédentes, **caractérisé en ce que** les tubes d'échange de chaleur (1, 10, 12) ont des ailettes longitudinales à l'intérieur de ces derniers.
